# EUROPÄISCHE PATENTSCHRIFT

(11) **EP 1 386 435 B1**
(45) Veröffentlichungstag und Bekanntmachung des Hinweises auf die Patenterteilung: **18.04.2007**
(21) Anmeldenummer: 01940213.0
(22) Anmeldetag: 08.05.2001
(51) Int. Cl.: H04L 1/00, H04L 27/26

(54) **VERFAHREN UND VORRICHTUNG ZUR DATENÜBERTRAGUNG IN EINEM MULTITRÄGERSYSTEM MIT PARALLELER CONCATENIERTER KODIERUNG UND MODULATION**
METHOD AND DEVICE FOR TRANSMITTING DATA IN A MULTI-CARRIER SYSTEM COMPRISING PARALLEL CONCATENATED CODING AND MODULATION
PROCEDE ET DISPOSITIF DE TRANSMISSION DE DONNEES DANS UN SYSTEME MULTIPORTEUSE A CODAGE ET MODULATION PARALLELES CONCATENES

(43) Veröffentlichungstag der Anmeldung: 04.02.2004
(73) Patentinhaber: SIEMENS AKTIENGESELLSCHAFT, 80333 München (DE)
(72) Erfinder: BOLINTH, Edgar, 41189 Moenchengladbach (DE); KOORA, Kalyan, 46395 Bocholt (DE); LOMBARDI, Giancarlo, NL-2517 Den Haag (NL)
(86) Internationale Anmeldenummer: PCT/DE2001/001741
(87) Internationale Veröffentlichungsnummer: WO 2002/091653

(56) Entgegenhaltungen:
- EP-A- 0 980 148
- EP-A- 0 991 221
- EP-A- 1 032 153
- US-A- 6 088 387
- KAISER S ET AL: "Comparison of error concealment techniques for an MPEG-2 video decoder in terrestrial TV-broadcasting" SIGNAL PROCESSING. IMAGE COMMUNICATION, ELSEVIER SCIENCE PUBLISHERS, AMSTERDAM, NL, Bd. 14, Nr. 6-8, Mai 1999 (1999-05), Seiten 655-676, XP004165401 ISSN: 0923-5965

## Beschreibung

Die vorliegende Erfindung bezieht sich auf eine Sende- und Empfangsvorrichtung zur verbesserten Datenübertragung in einem Multiträgersystem sowie ein zugehöriges Verfahren und insbesondere auf eine Sende- und Empfangsvorrichtung sowie ein zugehöriges Verfahren zur verbesserten Datenübertragung in einem drahtlosen OFDM-basierten Multiträgersystem mit Kanälen, die ein quasi statisches Verhalten aufweisen.

Herkömmliche digitale Multiträgersysteme senden und empfangen digitale Signale unter Verwendung einer Vielzahl von Trägern bzw. Subkanälen mit verschiedenen Frequenzen. Ein Sender teilt hierbei ein Sendesignal in eine Vielzahl von Komponenten auf, ordnet die Komponenten einem bestimmten Träger zu, codiert jeden Träger entsprechend seiner Komponente und überträgt jeden Träger über einen oder mehrere Übertragungskanäle.

Aus der Literaturstelle M. Lampe und H. Rohling, "Combining Multilevel Coding and adaptive Modulation in OFDM-Systems", 1^{st} OFDM-Workshop, September 21-22, 1999, Hamburg-Harburg, Germany, pp. 21.1-21.5 ist eine Vorrichtung und ein Verfahren zur verbesserten Datenübertragung in einem OFDM-Multiträgersystem bekannt, bei dem eine adaptive Modulation mit einer Mehrwertcodierung (Multilevelcoding) kombiniert wird.

Der Multilevelcodierer besteht hierbei aus einem Demultiplexer zum Aufteilen eines seriellen Datenstroms in eine Vielzahl von parallelen Datenströmen, einer Vielzahl von parallel gestalteten Codierern und nachgeschalteten QAM-Modulatoren und einen Multiplexer zum Rückführen in einen seriellen Datenstrom. Der Decodierer besteht aus einer Vielzahl von parallel geschalteten Decodierern und Demodulatoren und einem Multiplexer zum Rückführen des parallelen Datenstroms in einen seriellen Datenstrom. Durch die Kombination dieser Multilevelcodierung und der adaptiven Modulation erhält man ein Multiträgersystem mit verbesserten Datenübertragungseigenschaften und verringerter Störanfälligkeit.

Gemäß dieser Druckschrift wird folglich eine Daten-Konstellation partitioniert und die sogenannten "schwächsten" und "stärksten" Bits hinsichtlich ihrer Fehleranfälligkeit betrachtet, wobei auf der Grundlage der erfassten Eigenschaften eine mehr oder weniger starke Fehlerkorrektur beispielsweise in Form von FEC-Codierungs-Schemata (Forward Error Correction) angewendet wird. Zur Verringerung einer Systemkomplexität wird in der Mehrfachstufenstruktur des Decodierers das Ausgangssignal einer jeweiligen Demodulator-Decodiererstufe an die Demodulator/Decodiererstufe höherer Ordnung weitergegeben. Die Codierer sind in jeder Ebene gleich und werden lediglich unterschiedlich punktiert.

Aus der EP 0 991 221 A2 ist ein Verfahren und eine Anordnung zur Datenübertragung bekannt, bei dem Interferenzencharakteristika für eine Auswahl von n für eine Audiodatenübertragung zu nutzende Kanälen bestimmt werden. Datenbits der Audiodaten werden hierzu auf Grundlage ihrer Empfindlichkeit gegenüber auftretenden Fehlern auf n Klassen derart aufgeteilt, dass die Klassen von Bits mit der höchsten Fehlerempfindlichkeit auf Kanälen, die am wenigsten empfänglich für Interferenzen sind, übertragen.

Demgegenüber liegt der Erfindung die Aufgabe zugrunde, eine Sende- und Empfangsvorrichtung zur weiter verbesserten Datenübertragung in einem Multiträgersystem sowie ein zugehöriges Verfahren zu schaffen.

Erfindungsgemäß wird diese Aufgabe hinsichtlich der Sendevorrichtung durch die Merkmale des Patentanspruchs 1, hinsichtlich der Empfangsvorrichtung durch die Merkmale des Patentanspruchs 4 und hinsichtlich des Verfahrens durch die Maßnahmen des Patentanspruchs 16 gelöst.

Insbesondere durch die Verwendung einer ersten Codierstufe, einer Sende-Demultiplexerstufe, einer zweiten Codierstufe zum Durchführen einer zweiten Codierung, einer Modulatorstufe zum Durchführen einer QAM-Modulation, einer Sende-Multiplexerstufe, einem Multiträger-Modulator und einer Bitladevorrichtung zum Durchführen eines Bit-Lade-Algorithmus und zum Ansteuern der Sende-Demultiplexerstufe und Sende-Multiplexer stufe erhält man eine Sendevorrichtung mit weiter verbesserten Datenübertragungseigenschaften, die insbesondere für Kanäle mit einem quasi statischen Verhalten geeignet ist.

Die Empfangsvorrichtung weist insbesondere einen Multiträger-Demodulator, eine Empfangs-Demultiplexerstufe, eine erste Decodierstufe zum Durchführen einer ersten Decodierung, eine Demodulatorstufe zum Durchführen einer QAM-Demodulation, eine Empfangs-Multiplexerstufe, eine zweite Decodierstufe und eine Bitladevorrichtung zum Durchführen eines Bit-Lade-Algorithmus zum Ansteuern der Empfangs-Demultiplexerstufe und der Empfangs-Multiplexerstufe auf, wodurch empfangsseitig insbesondere bei einer Datenübertragung auf Kanälen mit quasi statischem Verhalten eine robustere Übertragung bzw. geringere Störanfälligkeit realisierbar ist.

Optional können die Sende- und Empfangsvorrichtung in ihrer ersten Codierstufe bzw. Decodierstufe einen Interleaver bzw. Deinterleaver zum Durchführen bzw. Rückgängigmachen einer Verschachtelung aufweisen, wodurch sich die Datenübertragungseigenschaften weiter verbessern lassen.

Ferner kann die erste Codierstufe bzw. Decodierstufe einen Punktierer bzw. Depunktierer zum Durchführen einer Punktierung bzw. Depunktierung in Abhängigkeit vom durchgeführten Bit-Lade-Algorithmus aufweisen, wodurch sich eine zuverlässigere Übertragung für die um den punktierten Datenwert herumliegenden Datenwerte ergibt.

Der Multiträger-Modulator bzw. -Demodulator der Sende- und Empfangsvorrichtung führt vorzugsweise eine OFDM-, MC-CDMA-und/oder CDMA-Modulation bzw. -Demodulation durch (Orthogonal Frequency Division Multiplexing, Multi-Carrier Code Division Multiple Access, Code Division Multiple Access), wodurch man besonders robuste Datenübertragungsverhältnisse bei hohen Interferenzniveaus erhält.

Vorzugsweise besteht die Modulator- bzw. Demodulatorstufe der Sende- und Empfangsvorrichtung aus einer Vielzahl von QAM-Modulatoren bzw. -Demodulatoren, mit denen jeweils unterschiedliche Modulations- bzw. Demodulations-Schemata durchgeführt werden können. Auf diese Weise ist eine sehr genaue Anpassung an jeweilige übertragungsverhältnisse bzw. Kanaleigenschaften möglich.

Zur weiteren Verbesserung der Datenübertragungseigenschaften kann die Empfangsvorrichtung in einem Rückkopplungspfad eine Sender-Kette zum Rückkoppeln von Ausgangssignalen der zweiten Decodierstufe aufweisen, die vorzugsweise einen Viterbi-Algorithmus durchführt, wobei die Sender-Kette die in einem Sendepfad verwendeten Funktionsblöcke nachbildet. Ein daraus gewonnene nachgebildete serielle Folge von QAM-Symbolen wird hierbei in einer Auswerteeinheit zur Erzeugung eines Zuverlässigkeits-Informationssignals mit einer vom Multiträger-Demodulator erzeugten empfangenen seriellen Folge von QAM-Symbolen ausgewertet und einer Auswahlvorrichtung zum Auswählen eines jeweiligen Zuverlässigkeits-Informationssignals 1-ter bis k-ter Iteration zugeführt, welches anschließend die erste Decodierstufe beeinflusst.

Alternativ zur vorstehend beschriebenen Rückkopplung kann jedoch in der zweiten Decodierstufe der Empfangsvorrichtung auch ein sogenannter Soft-Output-Viterbi-Algorithmus (SOVA) zum Ausgeben eines zusätzlichen berechneten Zuverlässigkeits-Informationssignals durchgeführt werden, welches wiederum in einer Auswahlvorrichtung der Demultiplexerstufe sowie der ersten Decodierstufe zugeführt wird. Bei Verwendung einer Punktierung bzw. Verschachtelung kann dieser Rückkopplungspfad optional auch einen Punktierer und einen Interleaver aufweisen, wodurch sich wiederum verbesserte Übertragungseigenschaften ergeben.

In den weiteren Ansprüchen sind weitere vorteilhafte Ausgestaltungen der Erfindung gekennzeichnet.

Die Erfindung wird nachstehend an Hand von Ausführungsbeispielen unter Bezugnahme auf die Zeichnung näher beschrieben.

Es zeigen:
- Figur 1: eine vereinfachte Blockdarstellung einer Sende- und Empfangsvorrichtung zur verbesserten Datenübertragung in einem Multiträgersystem gemäß einem ersten Ausführungsbeispiel;
- Figur 2: eine Sende- und Empfangsvorrichtung zur verbesserten Datenübertragung in einem Multiträgersystem gemäß einem zweiten Ausführungsbeispiel; und
- Figur 3: eine Sende- und Empfangsvorrichtung zur verbesserten Datenübertragung in einem Multiträgersystem gemäß einem dritten Ausführungsbeispiel.

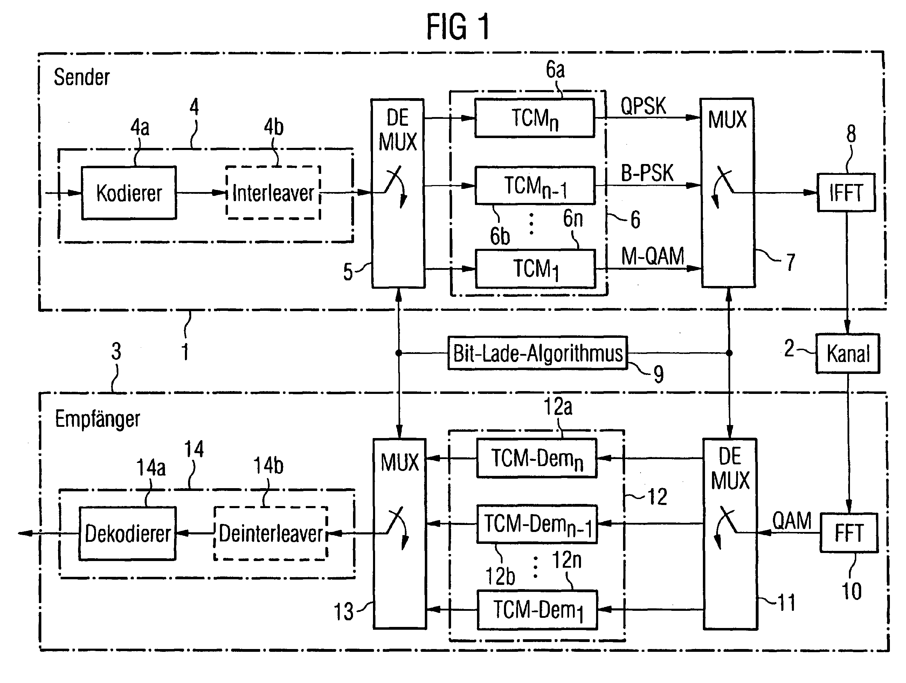

Figur 1 zeigt eine vereinfachte Blockdarstellung einer Sende-und Empfangsvorrichtung zur verbesserten Datenübertragung in einem drahtlosen Multiträgersystem, wobei vorzugsweise eine sogenannte OFDM-Modulation (Orthogonal Frequency Division Multiplexing) als Multiplex- bzw. Multiträger-Modulationsverfahren verwendet wird. Alternativ können jedoch auch MC-CDMA- (Multi-Carrier Code Division Multiple Access-) oder CDMA- (Code Division Multiple Access-) Verfahren angewendet werden.

Derartige Modulationsverfahren sind insbesondere für stark gestörte terrestrische Übertragungen digitaler Rundfunksignale besonders gut geeignet, da sie unempfindlich gegen Kanalechos sind.

Die vorliegende Erfindung ist jedoch nicht auf drahtlose Multiträgersysteme beschränkt, sondern umfasst in gleicher Weise drahtgebundene Multiträgersysteme, wie sie beispielsweise als Powerline (PLC) usw. bekannt sind.

Die vorliegende Erfindung bezieht sich insbesondere auf ein Multiträgersystem gemäß dem HiperLAN-Standard (HiperLAN/2-Standard). Dieser Standard kann zur Erweiterung eines bestehenden, drahtgebundenen LANs (Local Area Network) ebenso benutzt werden, wie zur Übertragung zwischen einzelnen Computern.

Gemäß Figur 1 bezeichnet das Bezugszeichen 1 einen Sender zum Senden von digitalen Daten über einen Kanal 2 an einen Empfänger 3. Der Kanal 2 stellt beispielsweise einen Frequenzbereich gemäß HiperLAN/2-Standard dar, wobei ein drahtloses Übertragungsmedium verwendet wird. Wie bereits vorstehend angedeutet, kann die vorliegende Erfindung jedoch auch auf draht- bzw. leitungsgebundene Multiträgersysteme angewendet werden, wie sie beispielsweise auch als xDSL (Digital Subscriber Line) bekannt sind. Hierbei wird als Übertragungsmedium eine a/b-Leitung verwendet.

Gemäß Figur 1 wird ein zu übertragender serieller Datenstrom zunächst einer ersten Codierstufe 4 mit einem Codierer 4a zum Durchführen einer ersten Codierung zugeführt. Optional kann diesem Codierer 4a ein sogenannter Interleaver 4b nachgeschaltet werden. Der Interleaver 4b sammelt hierbei zu sendende Datenblöcke, um sie dann ineinander in neue Datenblöcke zu verschachteln. Diese verschachtelte Datenblockgruppe wird anschließend einer Sende-Demultiplexerstufe 5 zum Aufteilen des seriellen Datenstroms in eine Vielzahl von parallelen Datenströmen zugeführt. Insbesondere bei blockweiser übertragung von Daten (Daten-Burst) können auf diese Weise gravierende Bündelfehler in eine Vielzahl von kleinen, vereinzelt auftretenden Fehlern 'aufgebrochen' werden, die sich daraufhin beispielsweise bei Sprachdaten nicht weiter auswirken. Die Anwendung von bekannter Kanalcodierungsverfahren wie z.B. FEC (Forward Error Correction) kann somit wieder optimal durchgeführt werden, wodurch sich eine Datenübertragung verbessert.

Gemäß Figur 1 wird der von der Sende-Demultiplexerstufe aufgeteilte Datenstrom einer TCM-Codierstufe 6 zum Durchführen einer Codierung und einer nachgeschalteten Modulation für eine Vielzahl paralleler Datenströme (z.B. Trellis-codierte Modulationen) zugeführt. Genauer gesagt besteht die zweite TCM-Codierstufe 6 aus einer Vielzahl von TCM (Trellis Coded Modulation) -Modulatoren 6a bis 6n zum Durchführen einer Vielzahl von unterschiedlichen Modulationsschemata, wie z.B. QPSK, 8-PSK bis M-QAM, die auf die Vielzahl von parallelen Datenströmen angewendet werden. Die Trellis-codierte Modulation stellt ein aufwendiges Modulationsverfahren mit integrierter Fehlerkorrektur dar, welches eine digitale Modulation und eine Kanalcodierung miteinander kombiniert. Da bei hochwertigen digitalen Modulationsverfahren die Modulationssignale (QAM, Quadratur Amplitude Modulation) im Zustandsraum sehr eng beieinander liegen, ist der Vorgang der Decodierung schwierig. Die Trellis-codierte Modulation sorgt nunmehr dafür, dass zwei ähnliche Codeworte auf Zustände im Zustandsraum, gekennzeichnet durch Amplitude und Phase, abgebildet werden, die nicht unmittelbar nebeneinander liegen, wodurch es möglich wird, selbst bei stark verrauschten Signalen die digitalen Signale zu decodieren. Grundsätzlich kann jedoch diese TCM-Codierstufe auch aus einer zweiten Codierstufe zum Durchführen einer zweiten Codierung und einer Modulatorstufe zum Durchführen einer QAM-Modulation bestehen, wobei die Anzahl der jeweils verarbeiteten parallelen Datenströme unterschiedlich sein kann.

Anschließend werden die in der TCM-Codierstufe 6 codierten parallelen Datenströme in einer Sende-Multiplexerstufe 7 zur Rückordnung in eine serielle Folge von QAM-Symbolen zugeführt und einem Multiträger-Modulator 8 zum Durchführen einer Abbildung und Impulsformung auf ein Multiträger-Zeitsignal zugeführt. Der Multiträger-Modulator 8 führt beispielsweise eine inverse Fast-Fourier-Transformation (IFFT) durch und ist vorzugsweise ein OFDM-Modulator zur Realisierung einer OFDM-Modulation (Orthogonal Frequency Division Multiplexing). Diese Signale werden anschließend über einen Kanal 2 einer drahtlosen oder drahtgebundenen Übertragungsschnittstelle an den Empfänger 3 weitergegeben.

Zur Realisierung eines adaptiven Multiträgersystems besitzt sowohl der Sender 1 als auch der Empfänger 3 zusammengehörende Funktionseinheiten einer Bitladevorrichtung 9, die gemäß Figur 1 jedoch nur als Ganzes, einmal dargestellt ist, da sie ohnehin über einen Signalisierungskanal miteinander abgeglichen werden muss. Die Bitladevorrichtung 9 führt im wesentlichen einen Bit-Lade-Algorithmus durch, wodurch in Abhängigkeit von jeweiligen Kanaleigenschaften eine optimale Verteilung bzw. optimale Auswahl von jeweiligen Codierverfahren, Modulationsverfahren und/oder eine Auswahl der zu übertragenden Bits gesteuert werden kann.

Gemäß Figur 1 steuert die Bitladevorrichtung 9 im wesentlichen in der Sende-Demultiplexerstufe 5 sowie der Sende-Multiplexerstufe 7 ein sogenanntes Bit-Loading, wobei die geladenen Bits über die unterschiedlichen parallelen Datenströme den unterschiedlichen TCM-Modulatoren (Trellis Coded Modulation) zugeführt und anschließend wieder in einen seriellen Datenstrom zurückgeführt werden. Insbesondere bei Verwendung von unterschiedlichen Modulations-Schemata können in Abhängigkeit von beispielsweise einem Signal-zu-Rauschverhältnis (SNR) auf dem Kanal 2 geeignete Modulations- bzw. Codierverfahren ausgewählt werden, wodurch man ein Multiträgersystem mit verbesserten Datenübertragungseigenschaften erhält.

Empfängerseitig wird das übertragene Multiträger-Zeitsignal von einem Multiträger-Demodulator 10 in eine serielle Folge von QAM-Symbolen QAM rückgeführt und einer Empfangs-Demultiplexerstufe 11 zugeführt, wobei beispielsweise eine Fast Fourier Transformation (FFT) angewendet wird. Vorzugsweise stellt die serielle Folge von QAM-Symbolen QAM eine sogenannte Quadratur-Amplituden-Modulierte Signalfolge dar, die sich insbesondere für die Übertragung hoher Datenraten eignet und dabei die Eigenschaften des sogenannten ASK (Amplitude Shift Keying) und des PSK (Phase Shift Keying) miteinander kombiniert. Genauer gesagt wird hierbei der Träger in Amplitude und Phase moduliert, wobei eine Vielzahl von Varianten möglich ist (QPSK, 8-PSK, 16-QAM, 32-QAM, 64-QAM, ... M-QAM). Derartige Modulationssignale bzw. dazugehörige Modulationsverfahren sind beispielsweise im HiperLAN/2-Standard näher spezifiziert.

In der Empfangs-Demultiplexerstufe 11 werden die seriellen Folgen von QAM-Symbolen (QAM) in eine Vielzahl paralleler Folgen von QAM-Symbolen aufgeteilt und einer TCM-Decodierstufe 12 zum Durchführen einer Vielzahl von Demodulationen mit nachgeschalteten Decodierungen (Trellis-codierten Demodulationen) zugeführt. Im wesentlichen wird hierbei wiederum die in der TCM-Codierstufe 6 durchgeführte Codierung aufgelöst, wobei vorzugsweise eine Vielzahl von TCM-Demodulatoren 12a bis 12n (Trellis Code Demodulation) zum Durchführen einer Vielzahl von unterschiedlichen Demodulations-Schemata vorliegt. Grundsätzlich kann jedoch diese TCM-Decodierstufe auch aus einer Demodulatorstufe zum Durchführen einer Vielzahl von QAM-Demodulationen auf die parallelen Folgen von QAM-Symbolen und einer ersten Decodierstufe zum Durchführen einer ersten Decodierung der demodulierten parallelen Datenströme zum Erzeugen eines parallelen Datenstroms bestehen, wobei eine Anzahl der jeweils verarbeiteten parallelen Datenströme unterschiedlich sein kann.

Wiederum wird die Empfangs-Demultiplexerstufe 11 von der Bitladevorrichtung bzw. ihrem zugehörigen Bit-Lade-Algorithmus derart angesteuert, dass sich eine optimale Rückgewinnung der übertragenen Datensignale einstellt.

Zur Rückführung der parallelen Datenströme in einen seriellen Datenstrom wird wiederum eine Empfangs-Multiplexerstufe 13 von der Bitladevorrichtung 9 derart angesteuert, dass die jeweiligen Daten in eine richtige Reihenfolge rückgeordnet werden.

Dieser serielle Datenstrom wird abschließend wiederum einer zweiten Decodierstufe 14 zum Durchführen einer zweiten Decodierung zugeführt, die im wesentlichen der ersten Codierung des Senders 1 bzw. des Codierers 4a entspricht. Diese zweite Decodierung wird von einem Decodierer 14a durchgeführt, wobei wiederum zur Verbesserung einer Fehleranfälligkeit ein Deinterleaver 14b optional eingefügt werden kann, der im wesentlichen die im Sender 1 durchgeführte Verschachtelung eines eventuell vorhandenen Interleavers 4b wieder rückgängig macht.

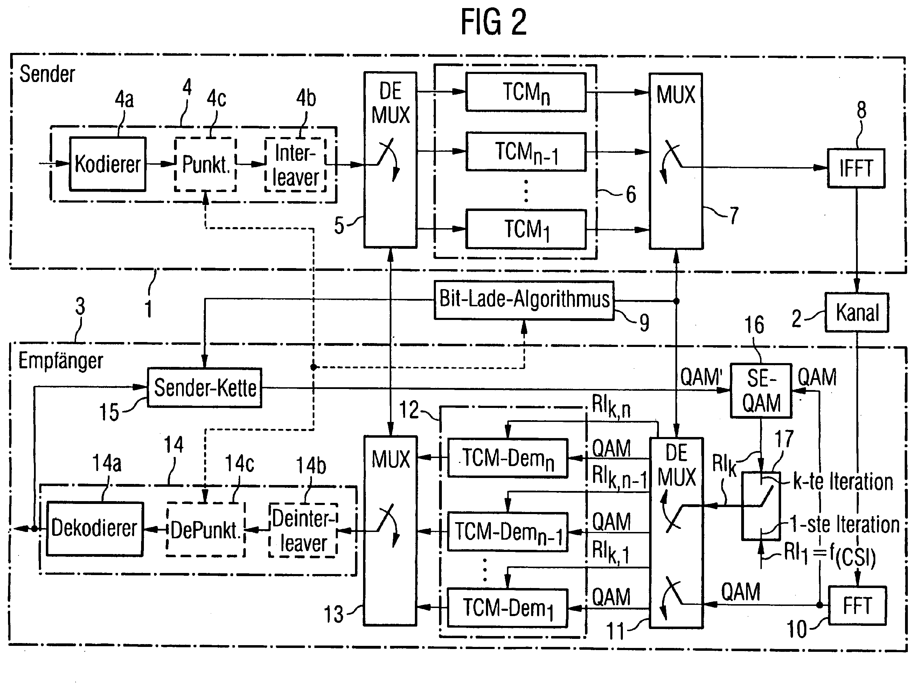

Figur 2 zeigt eine vereinfachte Blockdarstellung einer Sende-und Empfangsvorrichtung zur verbesserten Datenübertragung in einem Multiträgersystem gemäß einem zweiten Ausführungsbeispiel, wobei gleiche Bezugszeichen gleiche oder ähnliche Elemente wie in Figur 1 bezeichnen und auf eine wiederholte Beschreibung nachfolgend verzichtet wird.

Gemäß Figur 2 kann die Sendevorrichtung bzw. der Sender 1 optional in seiner ersten Codierstufe 4 ferner einen Punktierer 4c zum Durchführen einer Punktierung, z.B. Datenratenanpassung, des codierten seriellen Datenstroms in Abhängigkeit vom durchgeführten Bit-Lade-Algorithmus der Bitladevorrichtung 9 durchführen. Mit einem derartigen Punktierer 4c können aus dem codierten Datenstrom punktuell Daten herausgelöscht werden, wobei für die in unmittelbarer Nähe des punktierten Datenwertes sich befindenden bzw. angrenzenden Datenwerte zuverlässigere bzw. robustere Übertragungsmechanismen angewendet werden. Auf diese Weise kann ein zu übertragender Datenstrom wieder gezielt verringert bzw. angeglichen werden, ohne dabei die Datenübertragungseigenschaften wesentlich zu beeinflussen.

Empfangsseitig ist in gleicher Weise ein sogenannter Depunktierer 14c in der zweiten Decodierstufe 14 optional untergebracht, der eine Depunktierung des seriellen Eingangsdatenstroms in Abhängigkeit vom durchgeführten Bit-Lade-Algorithmus durchführt, und somit die im Sender 1 durchgeführte Punktierung wieder rückgängig macht.

Gemäß Figur 2 kann jedoch der Empfänger 3 ferner einen Rückkopplungspfad mit einer Sender-Kette 15, einer Auswerteeinheit 16 und einer Auswahlvorrichtung 17 aufweisen.

Vorzugsweise wird wie beim ersten Ausführungsbeispiel im zweiten Decodierer 14a ein sogenannter Viterbi-Algorithmus durchgeführt, der insbesondere in digitalen, zellularen Mobilfunkschnittstellen eingesetzt wird. Dieses Kanalcodierungs- bzw. Decodierungsverfahren ist insbesondere aufgrund seiner Datenrückgewinnungsmöglichkeiten vorteilhaft. Gemäß Figur 2 werden folglich die vom zweiten Decodierer 14a ausgegebenen Datensignale (Hard Decision Bits) der Sender-Kette 15 zugeführt, die im wesentlichen einem Sendepfad des dazugehörigen Senders 1, d.h. den Blöcken 4, 5, 6 und 7, entspricht.

Auf diese Weise erhält man im Rückkopplungspfad eine nachgebildete serielle Folge von QAM-Symbolen QAM', welche gemeinsam mit einer vom Demodulator 10 ausgegebenen empfangenen seriellen Folge von QAM-Symbolen QAM von der Auswerteeinheit 16 ausgewertet und zur Erzeugung eines Zuverlässigkeits-Informationssignals RIₖ herangezogen wird. Hierbei werden beispielsweise eine Vielzahl von Iterationen auf die Folgen von QAM-Symbole durchgeführt und von der Auswahlvorrichtung 17, der Empfangs-Demultiplexerstufe 11 und über diese nachfolgend der Vielzahl von TCM-Demodulatoren zugeführt.

Zu beachten ist hierbei, dass für die erste Iteration, bei der noch keine rückgekoppelten Folgen von QAM-Symbolen vorliegen, ein Zuverlässigkeits-Informationssignal RI₁ als Funktion einer Kanalzustandsinformation CSI (channel state information) zur Berechnung eines Metrikwertes verwendet wird. Die Kanalzustandsinformation CSI wird hierbei aus einer Kanalschätzung abgeleitet, die sich üblicherweise aus dem Signal-zu-Rauschverhältnis (SNR) eines jeweiligen Kanals bzw. Unterträgers ergibt und auch für die Bitladevorrichtung 9 verwendet werden kann. Auf diese Weise erhält man eine weitere Verbesserung der Datenübertragungseigenschaften ohne wesentlichen Mehraufwand im Empfänger 3.

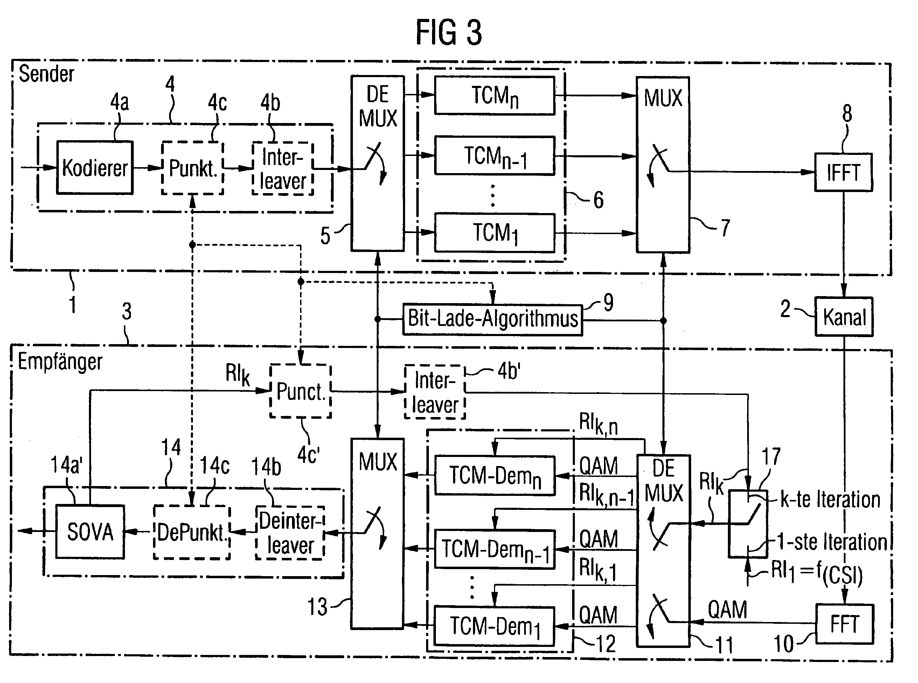

Figur 3 zeigt eine vereinfachte Blockdarstellung einer Sende-und Empfangsvorrichtung zur verbesserten Datenübertragung in einem Multiträgersystem gemäß einem dritten Ausführungsbeispiel, wobei gleiche Bezugszeichen gleiche oder ähnliche Elemente wie in Figuren 1 und 2 bezeichnen und auf eine wiederholte Beschreibung nachfolgend verzichtet wird.

Das Ausführungsbeispiel gemäß Figur 3 unterscheidet sich vom Ausführungsbeispiel gemäß Figur 2 im wesentlichen darin, dass nunmehr an Stelle des zweiten Decodierers 14a ein spezieller zweiter Decodierer 14a' verwendet wird. Genauer gesagt führt der zweite Decodierer 14a' gemäß Figur 3 einen sogenannten Soft-Output-Viterbi-Algorithmus (SOVA) durch, bei dem zusätzlich zu den vorstehend beschriebenen Ausgangsdaten (Hard Decision Bits) berechnete Zuverlässigkeits-Informationssignale RIₖ' ausgegeben werden (Soft Decision Bits). Diese berechneten Zuverlässigkeits-Informationssignale, die wie im vorhergehenden Beispiel wiederum eine Zuverlässigkeitsinformation für einen jeweiligen Kanal 2 bzw. Unterträger wiederspiegeln und z.B. einen log-MAP-Wert oder log-Likelyhood-Metric-Wert aufweisen können, werden wiederum der Auswahlvorrichtung 17 zum Auswählen eines Zuverlässigkeits-Informationssignals 1-ter bis k-ter Iteration zugeführt und mittels der Empfangs-Demultiplexerstufe 11 zur Ansteuerung der TCM-Decodierstufe 12 in geeigneter Weise auf parallele Folgen von Zuverlässigkeits-Informationssignale RI₁ abgebildet werden, wobei das Zuverlässigkeits-Informationssignal RI₁ erster Iteration wiederum eine Funktion einer Kanalzustandsinformation CSI ist und im wesentlichen aus einer Kanalschätzung abgeleitet wird.

Diese Zuverlässigkeits-Informationssignale RIₖ werden wiederum der Empfangs-Demultiplexerstufe 11 sowie den QAM-Demodulatoren der TCM-Decodierstufe 12 zugeführt, wobei in Abhängigkeit vom Bit-Lade-Algorithmus der Bitladevorrichtung 9 eine optimierte bzw. angepasste TCM-Demodulation/Decodierung erfolgt.

Optional können gemäß Figur 3 wiederum ein Punktierer 4c' und ein Interleaver 4b' in den Rückkopplungspfad eingefügt werden, sofern sendeseitig ebenfalls derartige Punktierer 4c und/oder Interleaver 4b vorhanden sind.

Durch die Verwendung des zweiten Decodierers 14a' mit Soft-Output-Viterbi-Algorithmus (SOVA) zur Realisierung von berechneten Zuverlässigkeits-Informationssignalen RIₖ' kann demzufolge eine Sender-Kette 15 zumindest teilweise entfallen, wodurch sich der Aufwand insbesondere für den Empfänger 3 weiter verringern lässt.

Insbesondere für Kanäle mit einem quasi stationären Verhalten können durch die erfindungsgemäße spezielle Verkettung der ersten Codierstufe mit der zweiten Codierstufe, die darüber hinaus eine adaptive Modulation ermöglicht, verbesserte Datenübertragungseigenschaften in Multiträgersystemen realisiert werden.

Die Erfindung wurde vorstehend an Hand eines Multiträgersystems im HiperLAN/2-Standard beschrieben. Sie ist jedoch nicht darauf beschränkt und umfasst in gleicher Weise drahtlose sowie drahtgebundene Multiträgersysteme mit oder ohne OFDM-Modulation.

### Bezugszeichenliste

- 1: Sender
- 2: Kanal
- 3: Empfänger
- 4: erste Codierstufe
- 4a: erster Codierer
- 4b: Interleaver
- 4c: Punktierer
- 5: Sende-Demultiplexerstufe
- 6: zweite Decodierstufe
- 6a bis 6n: TCM-Modulatoren
- 7: Sende-Multiplexerstufe
- 8: Multiträger-Modulator
- 9: Bitladevorrichtung
- 10: Multiträger-Demodulator
- 11: Empfangs-Demultiplexerstufe
- 12: erste Decodiervorrichtung
- 12a bis 12n: TCM-Demodulatoren
- 13: Empfangs-Multiplexerstufe
- 14: zweite Decodierstufe
- 14a: zweiter Decodierer
- 14b: Deinterleaver
- 14c: Depunktierer
- 15: Sender-Kette
- 16: Auswerteeinheit
- 17: Auswahlvorrichtung
- RIₖ: Zuverlässigkeits-Informationssignal
QAM, QAM' Folge von QAM-Symbolen, nachgebildete Folge von QAM-Symbolen

## Patentansprüche

1. Sendevorrichtung zur Datenübertragung in einem Multiträgersystem mit
einer ersten Codierstufe (4) zum Durchführen einer ersten Codierung auf einen seriellen Datenstrom;
einer Sende-Demultiplexerstufe (5) zum Aufteilen des codierten seriellen Datenstroms in eine Vielzahl von parallelen Datenströmen;
einer zweiten Codierstufe zum Durchführen einer zweiten Codierung für die Vielzahl paralleler Datenströme;
einer Modulatorstufe zum Durchführen einer QAM-Modulation für eine Vielzahl codierter paralleler Datenströme;
einer Sende-Multiplexerstufe (7) zur Rückordnung der modulierten parallelen Datenströme in einen seriellen Datenstrom;
einem Multiträger-Modulator (8) zum Durchführen einer Impulsformung und einer Abbildung von QAM-Symbolen auf ein Multiträger-Zeitsignal; und
einer Bitladevorrichtung (9) zum Durchführen eines Bit-Lade-Algorithmus und zum Ansteuern der Sende-Demultiplexerstufe (5) und der Sende-Multiplexerstufe (7), wobei die zweite Codierstufe eine erste Vielzahl von Codierern und die Modulatorstufe eine zweite Vielzahl von TCM-Modulatoren (6a bis 6n) ausgeführt zum Durchführen einer Vielzahl von unterschiedlichen Modulationsschemata (QPSK, 8-PSK, M-QAM) und die erste Codierstufe (4) einen Punktierer (4c) zum Durchführen einer Datenratenanpassung des codierten seriellen Datenstroms in Abhängigkeit vom durchgeführten Bit-Lade-Algorithmus aufweist.

2. Sendevorrichtung nach Patentanspruch 1, **dadurch gekennzeichnet, dass** die erste Codierstufe (4) einen Interleaver (4b) zum Durchführen einer Verschachtelung des seriellen Datenstroms aufweist.

3. Sendevorrichtung nach einem der Patentansprüche 1 bis 2, **dadurch gekennzeichnet, dass** der Multiträger-Modulator (8) eine OFDM-, MC-CDMA-, und/oder CDMA-Modulation durchführt.

4. Empfangsvorrichtung zur Datenübertragung in einem Multiträgersystem mit
einem Multiträger-Demodulator (10) zum Rückführen eines übertragenen Multiträger-Zeitsignals in eine serielle Folge von QAM-Symbolen;
einer Empfangs-Demultiplexerstufe (11) zum Aufteilen der seriellen Folge von QAM-Symbolen in eine Vielzahl von parallelen Folgen von QAM-Symbolen;
einer Demodulatorstufe zum Durchführen einer Vielzahl von QAM-Demodulationen auf die parallelen Folgen von QAM-Symbolen;
einer ersten Decodierstufe zum Durchführen einer ersten Decodierung der demodulierten parallelen Datenströme zum Erzeugen eines parallelen Datenstroms;
einer Empfangs-Multiplexerstufe (13) zur Rückordnung des parallelen Datenstroms in einen seriellen Datenstrom;
einer zweiten Decodierstufe (14) zum Durchführen einer zweiten Decodierung des seriellen Datenstroms; und
einer Bitladevorrichtung (9) zum Durchführen eines Bit-Lade-Algorithmus und zum Ansteuern der Empfangs-Demultiplexerstufe (11) und der Empfangs-Multiplexerstufe (13), wobei die Demodulatorstufe (12) eine erste Vielzahl von QAM-Demodulatoren zum Durchführen einer Vielzahl von unterschiedlichen Demodulations-Schemata und die erste Decodierstufe eine zweite Vielzahl von Decodern aufweist, die mittels TCM-Demodulatoren (12a bis 12n) ausgeführt sind und die zweite Decodierstufe (14) einen Depunktierer (4c) zum Durchführen einer Datenratenanpassung des seriellen Eingangsdatenstroms in Abhängigkeit vom durchgeführten Bit-Lade-Algorithmus aufweist.

5. Empfangsvorrichtung nach Patentanspruch 4, **dadurch gekennzeichnet, dass** die zweite Decodierstufe (14) einen De-Interleaver (14b) zum Rückgängigmachen einer Verschachtelung des seriellen Eingangsdatenstroms aufweist.

6. Empfangsvorrichtung nach einem der Patentansprüche 4 bis 5, **dadurch gekennzeichnet, dass** der Multiträger-Demodulator (10) eine OFDM-, MC-CDMA-, und/oder CDMA-Demodulation durchführt.

7. Empfangsvorrichtung nach einem der Patentansprüche 4 bis 6, **dadurch gekennzeichnet, dass** die zweite Decodierstufe (14) einen Viterbi-Algorithmus durchführt.

8. Empfangsvorrichtung nach einem der Patentansprüche 4 bis
7, **gekennzeichnet durch**
eine Sender-Kette (15), die einem Sendepfad (4, 5, 6, 7) nachgebildet ist und aus dem von der zweiten Decodierstufe (14) erzeugten Datenstrom eine nachgebildete serielle Folge von QAM-Symbolen (QAM') erzeugt;
eine Auswerteeinheit (16) zum Erzeugen eines Zuverlässigkeits-Informationssignals (RIₖ) in Abhängigkeit von der nachgebildeten seriellen Folge von QAM-Symbolen (QAM') und der empfangenen seriellen Folge von QAM-Symbolen (QAM) des Multiträger-Demodulators (10); und
eine Auswahlvorrichtung (17) zum Auswählen eines Zuverlässigkeits-Informationssignals (RI₁ bis RIₖ) 1-ter bis k-ter Iteration, wobei das Zuverlässigkeits-Informationssignal (RI₁) 1-ter Iteration eine Funktion einer Kanalzustandsinformation (CSI) darstellt.

9. Empfangsvorrichtung nach Patentanspruch 8, **dadurch**
**gekennzeichnet, dass** die Kanalzustandsinformation (CSI) aus einer Kanalschätzung abgeleitet ist.

10. Empfangsvorrichtung nach Patentanspruch 8 oder 9,
**dadurch gekennzeichnet, dass** die Vielzahl von QAM-Demodulatoren und ersten Decoder (12a bis 12n), ausgeführt durch TCM-Demodulatoren, in Abhängigkeit von den ausgewählten Zuverlässigkeits-Informationssignalen (RIₖ) gesteuert werden.

11. Empfangsvorrichtung nach einem der Patentansprüche 4 bis 7, **dadurch gekennzeichnet, dass** die zweite Decodierstufe (14, 14a) einen Soft-Output-Viterbi-Algorithmus zum Ausgeben eines nachgebildeten Zuverlässigkeits-Informationssignals (RIₖ') durchführt.

12. Empfangsvorrichtung nach Patentanspruch 11,
**gekennzeichnet durch**
einen Rückkopplungspfad zum Rückkoppeln des nachgebildeten Zuverlässigkeits-Informationssignals (RIₖ'); und
eine Auswahlvorrichtung (17) zum Auswählen eines Zuverlässigkeits-Informationssignals (RIₖ) 1-ter bis k-ter Iteration, wobei das Zuverlässigkeits-Informationssignal
(RI₁) erster Iteration eine Funktion einer Kanalzustandsinformation (CSI) darstellt.

13. Empfangsvorrichtung nach Patentanspruch 12, **dadurch gekennzeichnet, dass** die Kanalzustandsinformation (CSI) aus einer Kanalschätzung abgeleitet ist.

14. Empfangsvorrichtung nach Patentanspruch 12 oder 13,
**dadurch gekennzeichnet, dass** die Vielzahl von nachgeschalteten ersten Decodern in Abhängigkeit von den ausgewählten Zuverlässigkeits-Informationssignalen (RIₖ) gesteuert werden.

15. Empfangsvorrichtung nach einem der Patentansprüche 13 bis 14, **dadurch gekennzeichnet, dass** der Rückkopplungspfad einen Punktierer (4c') und/oder einen Interleaver (4b') aufweist, die einem jeweiligen Element (4c, 4b) eines Sendepfades nachgebildet sind.

16. Verfahren zur Datenübertragung in einem Multiträgersystem mit den Schritten:
a) Durchführen einer ersten Codierung auf einen seriellen Datenstrom;
b) Aufteilen des seriellen Datenstroms in eine Vielzahl von parallelen Datenströmen;
c) Durchführen einer Vielzahl von zweiten Codierungen auf die parallelen Datenströme;
d) Durchführen einer Vielzahl von QAM-Modulationen auf die codierten parallelen Datenströme;
e) Rückordnung der QAM-modulierten parallelen Datenströme in eine serielle Folge von QAM-Symbolen;
f) Durchführen einer Multiträger-Modulation;
g) Übertragung des modulierten Datenstroms auf zumindest einem Kanal (2) eines Übertragungsmediums;
h) Durchführen einer Multiträger-Demodulation zum Erzeugen einer seriellen Folge von QAM-Symbolen (QAM);
i) Aufteilen der empfangenen seriellen Folge von QAM-Symbolen (QAM) in eine Vielzahl von parallelen Folgen von QAM-Symbolen;
j) Durchführen einer Vielzahl von QAM-Demodulationen auf die parallelen Folgen von QAM-Symbolen;
k) Durchführen einer Vielzahl von ersten Decodierungen auf die QAM-demodulierten parallelen Datenströme;
l) Rückordnen der decodierten parallelen Datenströme in einen seriellen Datenstrom;
m) Durchführen einer zweiten Decodierung des seriellen Datenstroms; und
n) Durchführen eines Bit-Lade-Algorithmus zur Steuerung der Schritte b), e), i) und 1), wobei nach Schritt a) eine Punktierung und vor Schritt m) eine Depunktierung in Abhängigkeit vom durchgeführten Bit-Lade-Algorithmus durchgeführt wird.

17. Verfahren nach Patentanspruch 16, **dadurch**
**gekennzeichnet, dass**
nach Schritt a) eine Verschachtelung des seriellen Datenstroms und
nach Schritt 1) ein Rückgängigmachen der Verschachtelung des seriellen Eingangsdatenstroms durchgeführt wird.

18. Verfahren nach Patentanspruch 16 oder 17, **dadurch**
**gekennzeichnet, dass**
in Schritt c) und d) unterschiedliche Kombinationen aus mindestens einer zweiten Codierung und mindestens einer nachgeschaleteten QAM-Modulation und
in Schritt j) und k) unterschiedliche Kombinationen aus mindestens einer ersten Decodierung und mindestens einer vorgeschalteten QAM-Demodulation durchgeführt werden.

19. Verfahren nach einem der Patentansprüche 16 bis 18,
**dadurch gekennzeichnet, dass**
in Schritt f) eine OFDM-, MC-CDMA-, und/oder CDMA-Modulation und
in Schritt h) eine OFDM-, MC-CDMA-, und/oder CDMA-Demodulation durchgeführt wird.

20. Verfahren nach einem der Patentansprüche 16 bis 19,
**dadurch gekennzeichnet, dass**
in Schritt m) ein Viterbi-Algorithmus durchgeführt wird.

21. Verfahren nach einem der Patentansprüche 16 bis 20,
**dadurch gekennzeichnet, dass**
m1) der decodierte serielle Datenstrom über eine Sender-Kette (15) zum Erzeugen einer nachgebildeten seriellen Folge von QAM-Symbolen (QAM') rückgekoppelt wird;
m2) ein Zuverlässigkeits-Informationssignal (RIₖ) in Abhängigkeit der nachgebildeten und der empfangenen seriellen Folge von QAM-Symbolen (QAM', QAM) erzeugt wird; und
m3) ein Zuverlässigkeits-Informationssignal (RIₖ) 1-ter bis k-ter Iteration zur Steuerung von Schritt j) ausgewählt und abgebildet wird, wobei das abgebildete Zuverlässigkeits-Informationssignal (RI₁) erster Iteration eine Funktion einer Kanalzustandsinformation (CSI) darstellt.

22. Verfahren nach einem der Patentansprüche 16 bis 19,
**dadurch gekennzeichnet, dass**
in Schritt m) ein Soft-Output-Viterbi-Algorithmus zum Ausgeben eines berechneten Zuverlässigkeits-Informationssignals (RIₖ') durchgeführt wird.

23. Verfahren nach Patentanspruch 25, **dadurch gekennzeichnet, dass**
m1') das berechnete Zuverlässigkeits-Informationssignal (RIₖ') in einen Rückkopplungspfad zurückgekoppelt wird; und m2') ein Zuverlässigkeits-Informationssignal (RIₖ) 1-ter bis k-ter Iteration zur Steuerung von Schritt i) ausgewählt und abgebildet wird, wobei das abgebildete Zuverlässigkeits-Informationssignal (RI₁) der 1-ten Iteration eine Funktion eine Kanalzustandsinformation (CSI) darstellt.

24. Verfahren nach Patentanspruch 21 oder 23, **dadurch gekennzeichnet, dass** die Kanalzustandsinformation (CSI) aus einer Kanalschätzung abgeleitet wird.

25. Verfahren nach Patentanspruch 23 oder 24, **dadurch gekennzeichnet, dass** im Rückkopplungspfad eine Punktierung und/oder eine Verschachtelung wie im Sendepfad durchgeführt wird.

## Claims

1. Transmit device for data transfer in a multi-carrier system, having
a first encoding level (4) for performing a first encoding on a serial data stream;
a transmit demultiplexer level (5) for dividing the encoded serial data stream into a multiplicity of parallel data streams;
a second encoding level for performing a second encoding for the multiplicity of parallel data streams;
a modulator level for performing a QAM modulation for a multiplicity of encoded parallel data streams;
a transmit multiplexer level (7) for rearranging the modulated parallel data streams into a serial data stream;
a multi-carrier modulator (8) for performing a pulse shaping and a copying of QAM symbols onto a multi-carrier time signal; and
a bit-load device (9) for performing a bit-load algorithm and for controlling the transmit demultiplexer level (5) and the transmit multiplexer level (7), wherein the second encoding level has a first multiplicity of encoders and the modulator level has a second multiplicity of TCM modulators (6a to 6n) for performing a multiplicity of different modulation procedures (QPSK, 8-PSK, M-QAM) and the first encoding level (4) has a puncturer (4c) for performing a data speed adaptation of the encoded serial data stream depending on the bit-load algorithm which has been performed.

2. Transmit device according to claim 1, **characterised in that** the first encoding level (4) has an interleaver (4b) for performing an interleaving of the serial data stream.

3. Transmit device according to one of claims 1 to 2, **characterised in that** the multi-carrier modulator (8) performs an OFDM, MC-CDMA and/or CDMA modulation.

4. Receive device for data transfer in a multi-carrier system, having
a multi-carrier demodulator (10) for returning a transferred multi-carrier time signal in a serial sequence of QAM symbols; a receive demultiplexer level (11) for dividing the serial sequence of QAM symbols into a multiplicity of parallel sequences of QAM symbols;
a demodulator level for performing a multiplicity of QAM demodulations on the parallel sequences of QAM symbols;
a first decoding level for performing a first decoding of the demodulated parallel data streams for generating a parallel data stream;
a receive multiplexer level (13) for rearranging the parallel data stream into a serial data stream;
a second decoding level (14) for performing a second decoding of the serial data stream; and
a bit-load device (9) for performing a bit-load algorithm and for controlling the receive demultiplexer level (11) and the receive multiplexer level (13), wherein the demodulator level (12) has a first multiplicity of QAM demodulators for performing a multiplicity of different demodulation procedures and the first decoding level has a second multiplicity of decoders which are implemented as TCM demodulators (12a to 12n), and the second decoding level (14) has a depuncturer (4c) for performing a data speed adaptation of the serial input data stream depending on the bit-load algorithm which has been performed.

5. Receive device according to claim 4, **characterised in that** the second decoding level (14) has a deinterleaver (14b) for reversing an interleaving of the serial input data stream.

6. Receive device according to one of claims 4 to 5, **characterised in that** the multi-carrier demodulator (10) performs an OFDM, MC-CDMA and/or CDMA demodulation.

7. Receive device according to one of claims 4 to 6, **characterised in that** the second decoding level (14) performs a Viterbi algorithm.

8. Receive device according to one of claims 4 to 7,
**characterised by**
a transmitter chain (15) which is a reproduction of a transmit path (4, 5, 6, 7) and generates a reproduced serial sequence of QAM symbols (QAM') from the data stream which is generated by the second decoding level (14);
an analysis unit (16) for generating a reliability information signal (RIₖ) depending on the reproduced serial sequence of QAM symbols (QAM') and the received serial sequence of QAM symbols (QAM) of the multi-carrier demodulator (10); and
a select device (17) for selecting a reliability information signal (RI₁ to RIₖ) of a 1^{st} to k^{th} iteration, wherein the reliability information signal (RI₁) of a first iteration represents a function of a channel state information (CSI).

9. Receive device according to claim 8, **characterised in that** the channel state information (CSI) is derived from a channel estimation.

10. Receive device according to claim 8 or 9, **characterised in that** the multiplicity of QAM demodulators and first decoders (12a to 12n), implemented as TCM demodulators, are controlled depending on the selected reliability information signals (RIₖ) .

11. Receive device according to one of claims 4 to 7, **characterised in that** the second decoding level (14, 14a) performs a soft-output Viterbi algorithm for outputting a reproduced reliability information signal (RIₖ').

12. Receive device according to claim 11, **characterised by**
a feedback path for feeding back the reproduced reliability information signal (RIₖ'); and
a select device (17) for selecting a reliability information signal (RIₖ) of a 1^{st} to k^{th} iteration, wherein the reliability information signal (RI₁) of a first iteration represents a function of a channel state information (CSI).

13. Receive device according to claim 12, **characterised in that** the channel state information (CSI) is derived from a channel estimation.

14. Receive device according to claim 12 or 13, **characterised in that** the multiplicity of post-connected first decoders are controlled depending on the selected reliability information signals (RIₖ).

15. Receive device according to one of claims 13 to 14, **characterised in that** the feedback path has a puncturer (4c') and/or an interleaver (4b'), which are reproductions of a corresponding element (4c, 4b) of a transmit path.

16. Method for data transfer in a multi-carrier system, having the following steps:
a) performing a first encoding on a serial data stream;
b) dividing the serial data stream into a multiplicity of parallel data streams;
c) performing a multiplicity of second encodings on the parallel data streams;
d) performing a multiplicity of QAM modulations on the encoded parallel data streams;
e) rearranging the QAM-modulated parallel data streams into a serial sequence of QAM symbols;
f) performing a multi-carrier modulation;
g) transferring the modulated data stream on at least one channel (2) of a transfer medium;
h) performing a multi-carrier demodulation for generating a serial sequence of QAM symbols (QAM);
i) dividing the received serial sequence of QAM symbols (QAM) into a multiplicity of parallel sequences of QAM symbols;
j) performing a multiplicity of QAM demodulations on the parallel sequences of QAM symbols;
k) performing a multiplicity of first decodings on the QAM-demodulated parallel data streams;
l) rearranging the decoded parallel data streams into a serial data stream;
m) performing a second decoding of the serial data stream; and
n) performing a bit-load algorithm for controlling the steps b), e), i) and 1), wherein a puncturing is performed after step a) and a depuncturing is performed before step m) depending on the bit-load algorithm which as been performed.

17. Method according to claim 16, **characterised in that**
an interleaving of the serial data stream is performed following step a) and
a reversal of the interleaving of the serial input data stream is performed following step 1).

18. Method according to claim 16 or 17, **characterised in that**
different combinations of at least one second encoding and at least one post-connected QAM modulation are performed in step c) and d), and
different combinations of at least one first decoding and at least one pre-connected QAM demodulation are performed in step j) and k).

19. Method according to one of claims 16 to 18, **characterised in that**
an OFDM, MC-CDMA and/or CDMA modulation is performed in step f), and
an OFDM, MC-CDMA and/or CDMA demodulation is performed in step h).

20. Method according to one of claims 16 to 19, **characterised in that**
a Viterbi algorithm is performed in step m).

21. Method according to one of claims 16 to 20, **characterised in that**
m1) the decoded serial data stream is fed back via a transmitter chain (15) for generating a reproduced serial sequence of QAM symbols (QAM');
m2) a reliability information signal (RIₖ) is generated depending on the reproduced and the received serial sequence of QAM symbols (QAM', QAM); and
m3) a reliability information signal (RIₖ) of a 1^{st} to k^{th} iteration is selected and copied for controlling step j), wherein the copied reliability information signal (RI₁) of a first iteration represents a function of a channel state information (CSI).

22. Method according to one of claims 16 to 19, **characterised in that** a soft-output Viterbi algorithm for outputting a calculated reliability information signal (RIₖ') is performed in step m).

23. Method according to claim 25, **characterised in that**
m1') the calculated reliability information signal (RIₖ') is linked back into a feedback path; and
m2') a reliability information signal (RIₖ) of a 1^{st} to k^{th} iteration is selected and copied for controlling step i), wherein the copied reliability information signal (RI₁) of the first iteration represents a function of a channel state information (CSI).

24. Method according to claim 21 or 23, **characterised in that** the channel state information (CSI) is derived from a channel estimation.

25. Method according to claim 23 or 24, **characterised in that** a puncturing and/or an interleaving is performed in the feedback path as in the transmit path.

## Revendications

1. Dispositif d'émission pour la transmission de données d'un système multiporteuse comprenant
un premier niveau de codage (4) pour la mise en oeuvre d'un premier codage sur un flux de données série,
un niveau démultiplexeur d'émission (5) pour la division du flux de données série codée en une pluralité de flux de données parallèles,
un second niveau de codage pour la mise en oeuvre d'un second codage pour la pluralité de flux de données parallèles,
un niveau modulateur pour la mise en oeuvre d'une modulation QAM pour une pluralité de flux de données parallèles codés, un niveau multiplexeur d'émission (7) pour la réinjection des flux de données parallèles modulés dans un flux de données série,
un modulateur multiporteuse (8) pour la mise en oeuvre d'une conformation d'impulsion et une représentation de symboles QAM sur un signal de temps multiporteuse,
et un dispositif de chargement de bit (9) pour la mise en oeuvre d'un algorithme de chargement de bit et pour l'activation du niveau démultiplexeur d'émission (5) et du niveau multiplexeur d'émission (7), le second niveau de codage présentant une première pluralité de codeurs et le niveau modulateur une seconde pluralité de modulateurs TCM (6a à 6n) réalisé pour mettre en oeuvre une pluralité de différents schémas de modulation (QPSK, 8-PSK, M-QAM) et le premier niveau de codage (4) présentant un pointilleur (4c) pour la mise en oeuvre d'une adaptation de débit de données du flux de données série codé en fonction de l'algorithme de chargement de bit appliqué.

2. Dispositif d'émission selon la revendication 1,
**caractérisé en ce que** le premier niveau de codage (4) présente un entrelaceur (4b) pour la mise en oeuvre d'un entrelacement du flux de données série.

3. Dispositif d'émission selon l'une quelconque des revendications 1 à 2, **caractérisé en ce que** le modulateur multiporteuse (8) effectue une modulation OFDM, MC-CDMA et/ou CDMA.

4. Dispositif de réception pour la transmission de données dans un système multiporteuse comprenant
un démodulateur multiporteuse (10) pour le retour d'un signal de temps multiporteuse en une séquence série de symboles QAM,
un niveau démultiplexeur de réception (11) pour la répartition de la séquence série de symboles QAM en une pluralité de séquences parallèles de symboles QAM,
un niveau démodulateur pour la mise en oeuvre d'une pluralité de démodulations QAM entre les séquences parallèles de symboles QAM,
un premier niveau de décodage pour la mise en oeuvre d'un premier décodage des flux de données parallèles démodulés pour générer un flux de données parallèle,
un niveau multiplexeur de réception (13) pour la réinjection du flux de données parallèle dans un flux de données série, un second niveau de décodage (14) pour la mise en oeuvre d'un second décodage du flux de données série,
et un dispositif de chargement de bit (9) pour la mise en oeuvre d'un algorithme de chargement de bit pour l'activation du niveau démultiplexeur de réception (11) et du niveau multiplexeur de réception (13), le niveau démodulateur (12) présentant une première pluralité de démodulateurs QAM pour la mise en oeuvre d'une pluralité de différents schémas de démodulation et le premier niveau de décodage une seconde pluralité de décodeurs, qui sont réalisés au moyen de démodulateurs TCM (12a à 12n) et le second niveau de décodage (14) un dépointilleur (4c) pour la mise en oeuvre d'une adaptation de débit de données du flux de données d'entrée série en fonction de l'algorithme de chargement de bit appliqué.

5. Dispositif de réception selon la revendication 4,
**caractérisé en ce que** le second niveau de décodage (14) présente un désentrelaceur (14b) pour l'annulation d'un entrelacement du flux de données d'entrée série.

6. Dispositif de réception selon l'une quelconque des revendications 4 à 5, **caractérisé en ce que** le démodulateur multiporteuse (10) effectue une démodulation OFDM, MC-CDMA et/ou CDMA.

7. Dispositif de réception selon l'une quelconque des revendications 4 à 6, **caractérisé en ce que** le second niveau de décodage (14) applique un algorithme de Viterbi.

8. Dispositif de réception selon l'une quelconque des revendications 4 à 7, **caractérisé par** une chaîne d'émetteurs (15), qui est identique à un chemin d'émission (4, 5, 6, 7) et génère à partir du flux de données généré par le second niveau de décodage (14) une séquence série simulée de symboles de QAM (QAM'), une unité d'analyse (16) pour générer un signal d'information de fiabilité (RIₖ) en fonction de la séquence série simulée de symboles de QAM (QAM') et de la séquence série reçue de symboles de QAM (QAM) du démodulateur multiporteuse (10) et un dispositif de sélection (17) pour la sélection d'un signal d'information de fiabilité (RI₁ jusqu'à RIₖ) 1-ère jusqu'à k-ième itération, le signal d'information de fiabilité (RI₁) 1-ère itération représentant une fonction d'une information d'état de canal (CSI).

9. Dispositif de réception selon la revendication 8,
**caractérisé en ce que** l'information du canal d'état (CSI) est déduite d'une évaluation de canal.

10. Dispositif de réception selon la revendications 8 ou 9, **caractérisé en ce que** la pluralité de démodulateurs QAM et de premiers décodeurs (12a à 12n), réalisés par des démodulateurs TCM, est commandée en fonction des signaux d'information de fiabilité (RIₖ) sélectionnés.

11. Dispositif de réception selon l'une quelconque des revendications 4 à 7, **caractérisé en ce que** le second niveau de décodage (14, 14a) effectue un algorithme de Viterbi Soft-Output pour la sortie d'un signal d'information de fiabilité (RIₖ') simulé.

12. Dispositif de réception selon la revendication 11,
**caractérisé par** un chemin de réaction pour la réaction du signal d'information de fiabilité (RIₖ') simulé et un dispositif de sélection (17) pour la sélection d'un signal d'information de fiabilité (RIₖ) 1-ère jusqu'à k-ième itération, le signal d'information de fiabilité (RI₁) de première itération représentant une fonction d'une information d'état de canal (CSI).

13. Dispositif de réception selon la revendication 12,
**caractérisé en ce que** l'information d'état de canal (CSI) est déduite d'une évaluation de canal.

14. Dispositif de réception selon la revendication 12 ou 13, **caractérisé en ce que** la pluralité de premiers décodeurs branchés en aval est commandée en fonction des signaux d'information de fiabilité (RIₖ) choisis.

15. Dispositif de réception selon l'une quelconque des revendications 13 à 14, **caractérisé en ce que** le chemin de réaction présente un pointilleur (4c') et/ou un entrelaceur (4b'), qui sont copiés sur un élément respectif (4c, 4b) d'un chemin d'émission.

16. Procédé pour la transmission de données dans un système multiporteuse comprenant les étapes suivantes :
a) mise en oeuvre d'un premier codage sur un flux de données série ;
b) division du flux de données série en une pluralité de flux de données parallèles ;
c) mise en oeuvre d'une pluralité de seconds codages sur les flux de données parallèles ;
d) mise en oeuvre d'une pluralité de modulations QAM sur les flux de données parallèles codés ;
e) recyclage des flux de données parallèles modulés par QAM dans une séquence série de symboles QAM ;
f) mise en oeuvre d'une modulation multiporteuse ;
g) transmission du flux de données modulé sur au moins un canal (2) d'un milieu de transmission ;
h) mise en oeuvre d'une modulation multiporteuse pour générer une séquence série de symboles de QAM (QAM) ;
i) répartition de la séquence série reçue de symboles de QAM (QAM) en une pluralité de séquences parallèles de symboles QAM ;
j) mise en oeuvre d'une pluralité de démodulations QAM entre les séquences parallèles de symboles QAM ;
k) mise en oeuvre d'une pluralité de premiers décodages sur les flux de données parallèles démodulés par QAM ;
l) réinjection des flux de données parallèles décodés dans un flux de données série ;
m) mise en oeuvre d'un second décodage du flux de données série ; et
n) mise en oeuvre d'un algorithme de chargement de bits pour la commande des étapes b), e), i) et 1), un pointillage étant effectué après l'étape a) et un dépointillage étant effectué avant l'étape m) en fonction de l'algorithme de chargement de bit appliqué.

17. Procédé selon la revendication 16, **caractérisé en ce que**, après l'étape a), on effectue un entrelacement du flux de données série et après l'étape 1), une annulation de l'entrelacement du flux de données d'entrée série est réalisée.

18. Procédé selon la revendication 16 ou 17, **caractérisé en ce que** à l'étape c) et d), on applique différentes combinaisons à partir d'au moins un second codage et d'au moins une modulation QAM placée en aval et à l'étape j) et k) différentes combinaisons à partir d'au moins un premier décodage et d'au moins une démodulation QAM placée en aval.

19. Procédé selon l'une quelconque des revendications 16 à 18, **caractérisé en ce que**, à l'étape f), on effectue une modulation OFDM-, MC-CDMA-, et/ou CDMA, et à l'étape h) une démodulation OFDM-, MC-CDMA-, et/ou CDMA.

20. Procédé selon l'une quelconque des revendications 16 à 19, **caractérisé en ce qu'**un algorithme de Viterbi est réalisé à l'étape m).

21. Procédé selon l'une quelconque des revendications 16 à 20,
**caractérisé en ce que**
ml) le flux de données série décodé est réinjecté au moyen d'une chaîne d'émetteurs (15) pour générer une séquence série simulée de symboles de QAM (QAM') ;
m2) un signal d'information de fiabilité (RIₖ) est généré en fonction des séquences série simulée et reçue de symboles de QAM (QAM', QAM) ; et
m3) un signal d'information de fiabilité (RIₖ) 1-ère jusqu'à k-ième itération est sélectionné et représenté pour la commande de l'étape j), le signal d'information de fiabilité (RI₁) reproduit de première itération représentant une fonction d'une information d'état de canal (CSI).

22. Procédé selon l'une quelconque des revendications 16 à 19, **caractérisé en ce que**, à l'étape m), on effectue un algorithme de Viterbi Soft-Output pour l'édition d'un signal d'information de fiabilité (RIₖ') calculé.

23. Procédé selon la revendication 25, **caractérisé en ce que**
m1') le signal d'information de fiabilité (RIₖ') calculé est réinjecté dans un chemin de réinjection ; et
m2') un signal d'information de fiabilité (RIₖ) 1-ère jusqu'à k-ième itération est sélectionné et représenté pour la commande de l'étape i) le signal d'information de fiabilité (RI₁) représenté de la 1-ière itération représentant une fonction d'une information d'état de canal (CSI).

24. Procédé selon la revendication 21 ou 23, **caractérisé en ce que** l'information d'état de canal (CSI) est déduite d'une évaluation de canal.

25. Procédé selon la revendication 23 ou 24, **caractérisé en ce qu'**un pointillage et/ou un entrelacement est effectué dans le chemin de réaction comme dans le chemin d'émission.
